# EUROPEAN PATENT APPLICATION

(11) **EP 1 577 843 A2**
(43) Date of publication of application: **21.09.2005**
(21) Application number: 05013208.3
(22) Date of filing: 17.10.2002
(51) Int. Cl.: G07C 9/00, B60R 25/00

(54) **Method and system for preventing accident**

(30) Priority: 18.10.2001 JP 2001321177
(62) Divisional of application: 02023070.2
(71) Applicant: MATSUSHITA ELECTRIC INDUSTRIAL CO., LTD., Osaka 571-8501 (JP)
(72) Inventor: Yamamoto, Shinichi, Hirakata-shi Osaka 573-0113 (JP); Onoue, Junichi, Nara-shi Nara 630-8113 (JP)
(74) Representative: Balsters, Robert

(57) **Abstract**

A method for preventing an incident using a dialog-type apparatus capable of performing a dialog with a human being. The includes the steps of the dialog-type apparatus detecting a human being; the dialog-type apparatus performing a dialog with the human being; the dialog-type apparatus determining whether or not an abnormality has occurred based on a result of the dialog; and the dialog-type apparatus making a report when it is determined that the abnormality has occurred.

## Description

### BACKGROUND OF THE INVENTION

### 1. FIELD OF THE INVENTION:

The present invention relates to a method for preventing incidents, such as accidents and crimes, using a dialog-type apparatus capable of performing dialog with a human being, and a system including a plurality of such dialog-type apparatuses.

### 2. DESCRIPTION OF THE RELATED ART:

Conventionally, an apparatus referred to as an immobilizer is known as a robbery preventing apparatus for protecting a vehicle from being stolen. The immobilizer prevents the vehicle's engine from starting when an ID code provided by a key and an ID code registered in the vehicle do not match each other. The immobilizer prevents the vehicle's engine from starting by an illegally copied key which cannot transmit the ID registered in the vehicle. Thus, the immobilizer effectively prevents the vehicle from being stolen using an illegally copied key.

A vehicle robbery prevention system using GPS, which is used in car navigation, has also been developed. According to this system, a specific device is installed in a vehicle in advance, such that the position of the vehicle can be traced when the vehicle is stolen. Some of the security companies adopting this system provide service of dispatching a guard in a rush to the location where the stolen vehicle has been tracked.

A system referred to as a home security system is known. This system functions as follows. When a suspicious person invades a residence, a security sensor senses abnormality and a home controller sends an abnormality signal to a control center. The control center is structured so as to dispatch a guard in a rush to the location where the security sensor has sensed the abnormality.

Japanese Laid-Open Publication No. 10-155749, for example, discloses technology for preventing a serious accident by detecting abnormality in a human body using a sensor attached to the human body and reporting the detection to a third party.

The above-described immobilizer is effective for preventing a vehicle from being stolen using an illegally copied key, but cannot prevent a vehicle from being stolen using an authentic key. Accordingly, when the authentic key is lost, there is a risk that the vehicle may be stolen.

The above-described vehicle robbery prevention system cannot trace the stolen vehicle when the perpetrator destroys the system, such that the stolen vehicle cannot be tracked.

The above-described home security system cannot prevent robbery when the security sensor cannot sense an abnormality because, for example, the perpetrator behaves as if he or she was a resident of the house.

The technology described in Japanese Laid-Open Publication No. 10-155749 requires that the subject should wear a sensor and the health state of the subject should be monitored. The subject is inevitably subjected to discomfort or difficulty in mobility since the sensor must be worn.

### SUMMARY OF THE INVENTION

The present inventors conceived that a crime can be prevented by specifying a perpetrator or an invader to a residence using a dialog-type apparatus. The present inventors also conceived that a crime can be prevented by allowing a plurality of dialog-type apparatuses to operate in association with each other. The present inventors further conceived that an incident can be prevented by detecting generation of an abnormality using a dialog-type apparatus.

According to one aspect of the invention, a method for preventing an incident using a dialog-type apparatus capable of performing a dialog with a human being is provided. The includes the steps of the dialog-type apparatus detecting a human being; the dialog-type apparatus performing a dialog with the human being; the dialog-type apparatus determining whether or not an abnormality has occurred based on a result of the dialog; and the dialog-type apparatus making a report when it is determined that the abnormality has occurred.

In one embodiment of the invention, the abnormality refers to a situation where the human being is not a user of the dialog-type apparatus, or the human being is a user of the dialog-type apparatus and is not in a normal state.

According to another aspect of the invention, a method for preventing an incident using a dialog-type apparatus capable of performing a dialog with a human being is provided. The includes the steps of the dialog-type apparatus detecting a human being; the dialog-type apparatus performing a dialog with the human being regarding a user of the dialog-type apparatus; the dialog-type apparatus determining whether or not the human being is the user based on a result of the dialog; the dialog-type apparatus determining whether or not the user is in a normal state when it is determined that the human being is the user; and the dialog-type apparatus making a report when it is determined that the user is not in a normal state.

In one embodiment of the invention, the dialog-type apparatus outputs a line of dialog to the user and checks a response thereto, thereby determining whether or not the user is in a normal state.

According to still another aspect of the invention, a method for preventing a crime using a dialog-type apparatus capable of performing a dialog with a human being is provided. The method includes the steps of the dialog-type apparatus detecting a human being; the dialog-type apparatus receiving location information which indicates a location of a user of the dialog-type apparatus; the dialog-type apparatus determining whether or not the human being is the user based on the location information; and the dialog-type apparatus making a report when it is determined that the human being is not the user.

In one embodiment of the invention, the dialog-type apparatus receives the location information from another dialog-type apparatus via a communication line.

In one embodiment of the invention, the step of the dialog-type apparatus determining whether or not the human being is the user based on the location information includes the steps of the dialog-type apparatus determining whether or not the user is absent based on the location information; the dialog-type apparatus performing a dialog with the human being regarding the user when it is determined that the user is absent; and the dialog-type apparatus determining whether or not the human being is the user based on a result of the dialog.

In one embodiment of the invention, the method further includes the steps of the dialog-type apparatus determining whether or not the user is in a normal state when it is determined that the human being is the user; and the dialog-type apparatus making a report when it is determined that the user is not in a normal state.

In one embodiment of the invention, the dialog-type apparatus refers to dialog history in a dialog history database of another dialog-type apparatus.

In one embodiment of the invention, the dialog-type apparatus is installed in a vehicle.

In one embodiment of the invention, the dialog-type apparatus is installed in a vehicle.

In one embodiment of the invention, the dialog-type apparatus is installed in a vehicle.

In one embodiment of the invention, the dialog-type apparatus is installed in a house.

In one embodiment of the invention, the dialog-type apparatus is installed in a house.

In one embodiment of the invention, the dialog-type apparatus is installed in a house.

According to still another aspect of the invention, a system including a plurality of dialog-type apparatuses which are connected to each other via a communication network is provided. Each of the plurality of dialog-type apparatuses is structured so as to be capable of performing a dialog with a human being. Each of the plurality of dialog-type apparatuses includes a detection section for detecting a human being; a location information memory for storing location information which indicates a location of a user of the dialog-type apparatus; a receiving section for receiving the location information from the location information memory of another dialog-type apparatus in the systemvia the communication network; a determination section for determining whether or not the human being detected by the detection section is the user based on the location information received from the another dialog-type apparatus; and a reporting section for making a report when it is determined that the human being is not the user.

In one embodiment of the invention, the determination section determines whether or not the user is absent based on the location information; when it is determined that the user is absent, performs a dialog regarding the user with the human being detected by the detection section; and determines whether or not the human being is the user based on a result of the dialog.

In one embodiment of the invention, when it is determined that the human being detected by the detection section is the user, the determination section further determines whether or not the user is in a normal state; and when it is determined that the user is not in a normal state, the reporting section makes a report.

Thus, the invention described herein makes possible the advantages of providing a method for preventing incidents , such as accidents and crimes, using a dialog-type apparatus, and a system including a plurality of such dialog-type apparatuses.

These and other advantages of the present invention will become apparent to those skilled in the art upon reading and understanding the following detailed description with reference to the accompanying figures.

### BRIEF DESCRIPTION OF THE DRAWINGS

Figure **1A** is a block diagram illustrating an exemplary structure of a dialog-type agent **1;**
Figure **1B** schematically shows a state where a driver **80** and the dialog-type agent **1** are involved in a dialog;
Figure **2** is a flowchart illustrating an exemplary procedure of a crime prevention program which is executed by the dialog-type agent **1** shown in Figure **1A;**
Figure **3** is a flowchart illustrating an exemplary procedure of a crime prevention program which is executed by the dialog-type agent **1** shown in Figure **1A;**
Figure **4** shows an example of a multi-agent environment;
Figure **5** is a flowchart illustrating an example of a detailed flow of the step ST6 shown in Figure **2;**
Figure **6** is a flowchart illustrating an exemplary procedure of a crime prevention program which is executed by each of a house agent **81,** a vehicle agent **82** and a mobile agent **83;**
Figure **7** schematically shows a state where the house agent **81** receives location information indicating the location of user A from the vehicle agent **82** and receives location information indicating the location of user B from the mobile agent **83;** and
Figure **8** shows an example of the content of a location information memory **90** of the house agent **81.**

### DESCRIPTION OF THE PREFERRED EMBODIMENTS

Hereinafter, the present invention will be described by way of illustrative examples with reference to the accompanying drawings.

### (Example 1)

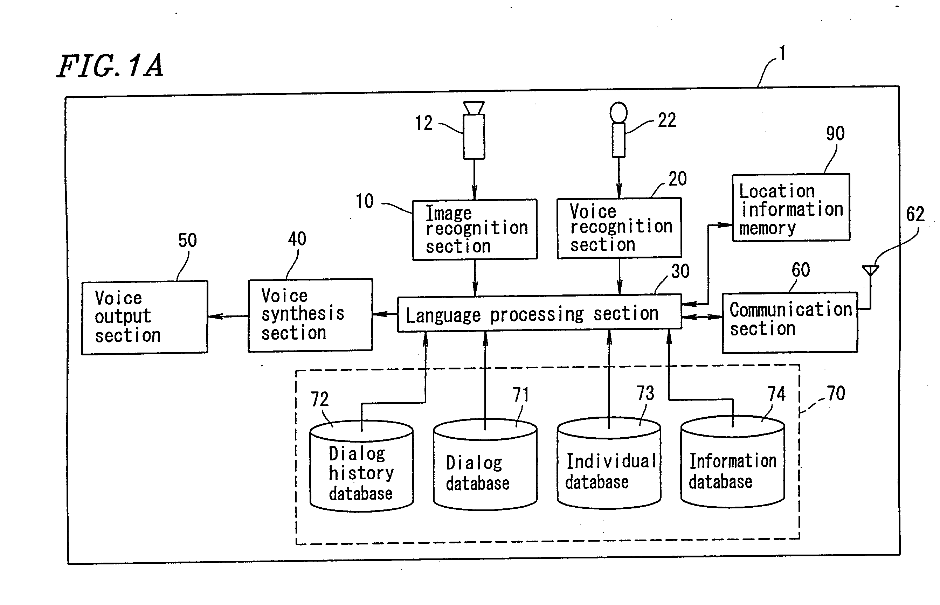

Figure **1A** is an exemplary structure of a dialog-type agent **1** as an example of a dialog-type apparatus.

The dialog-type agent **1** includes an image recognition section **10,** a voice recognition section **20,** a language processing section **30,** a voice synthesis section **40,** a voice output section **50,** a communication section **60,** and a database section **70.**

The image recognition section **10** is connected to an image input section **12** (for example, a camera), and performs image recognition processing on an image which is input through the image input section **12** so as to detect a human being based on the image. The voice recognition section **20** is connected to a voice input section **22** (for example, a microphone), and recognizes a voice which is input through the voice input section **22.**

The language processing section **30** understands the content of a dialog based on a voice recognition result which is output from the voice recognition section **20** and performs a search in the database **70** so as to generate a response suitable to the individual information of the human being and the state of the dialog.

The response generated by the language processing section **30** is synthesized into a voice by the voice synthesis section **40.** The voice synthesized in this manner is output through the voice output section **50** (for example, a speaker).

The communication section **60** is used for performing a report to a security company or a law enforcement agent through a communication line. The communication line may be a wireless communication line or a wired communication line. When, for example, the wireless communication line is used, the communication section 60 transmits or receives data through an antenna **62.**

The database **70** includes a dialog database **71** for storing dialog patterns and rules for generating a response, a dialog history database **72** for storing the history of past dialog, an individual database **73** for storing information used for specifying a subject individual (for example, information regarding the subject individual's gender, age, name, occupation, personality, interests and birth date) or information that only the subject individual can know, and an information database **74** for storing information regarding weather, news and the like. The information regarding weather, news and the like is, for example, acquired from the outside of the dialog-type agent **1** through the communication section **60** and the language processing section **30,** and is stored in the information database **74.**

Herein, the term "subject individual" is defined to refer to a user (possessor) of the dialog-type agent **1.** The user can be one person or a plurality of persons. Information on "who the user of the dialog-type agent 1 is" is registered in the individual database **73** in advance. In this case, the "subject individual" refers to a person who is registered in advance in, for example, the individual database **73** as the user of the dialog-type agent **1.**

Thus, the dialog-type agent **1** is structured so as to be capable of performing a dialog with a human being. The dialog-type agent **1** preferably has a function of exploring an information space such as the Internet and performing information processing, such as an information search, filtering, schedule adjustments and the like, on behalf of a human being (a function of a software agent). The dialog-type agent **1** performs a dialog as if it was a human being, and therefore is sometimes referred to as a "personified agent".

The dialog-type agent **1** is a type of computer. The functions of the above-described elements **10** through **74** of the dialog-type agent **1** can be implemented by, for example, a CPU (not shown) in a computer executing various types of programs which are stored in a memory (not shown) in the computer. However, the functions of the elements **10** through **74** are not limited to be implemented by software. A part of or all of the functions of the elements 10 through **74** of the dialog-type agent **1** can be implemented by hardware.

For the details of the research regarding a dialog-type agent, refer to the web pages of Ministry of International Trade and Industry, and Agency of Industrial Science and Technology, Electrotechnical Laboratory, Interactive Intermodal Integration Lab (http://www.etl.go.jp/-7233/).

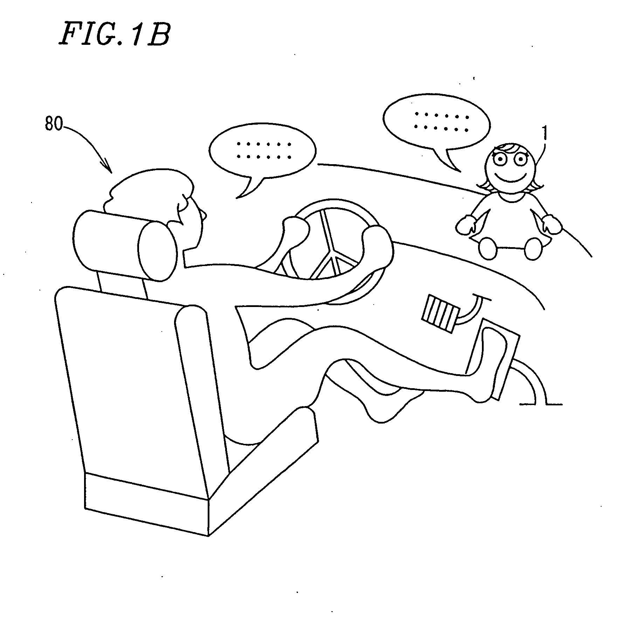

Figure **1B** schematically shows a state where a driver 80 of the vehicle is involved in a dialog with the dialog-type agent **1.** The dialog-type agent **1** can be installed at an arbitrary position in the vehicle, for example, on or in a dashboard.

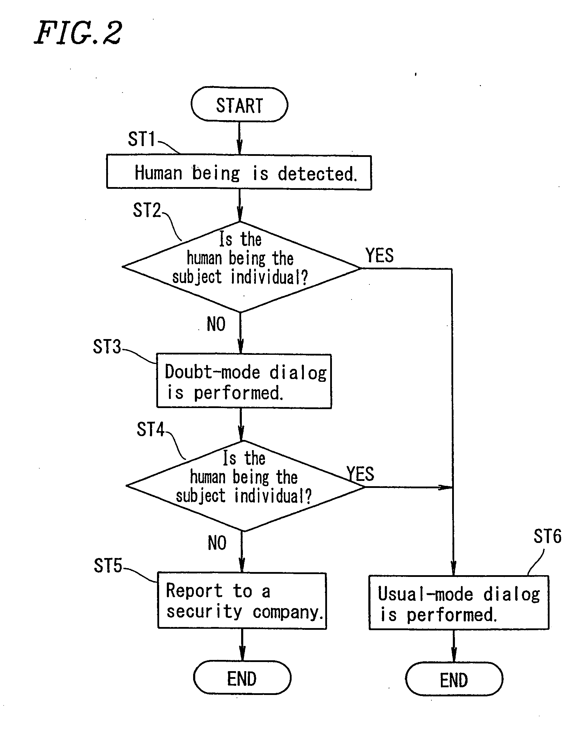

Figure **2** is a flowchart illustrating an exemplary procedure of a crime prevention program executed by the dialog-type agent **1** shown in Figure **1A.**

Hereinafter, each of the steps of the crime prevention program shown in Figure **2** will be described with an example of vehicle robbery prevention. It is assumed that the dialog-type agent **1** is installed in a vehicle.

In step ST1, the image recognition section **10** detects a human being based on an image which is input through the image input section **12.** The human being detected in step ST1 may be the subject individual or may not be the subject individual (may be, for example, a criminal).

In step ST2, the image recognition section 10 obtains the probability that the detected human being is the subject individual. The probability can be obtained, for example, through calculation by comparing a feature amount indicating the detected human being and a feature amount indicating the subject individual which is stored in the individual database **73.** The probability that the detected human being is the subject individual is represented by, for example, a numerical value in the range of 0% to 100%.

In step ST2, the image recognition section 10 determines whether or not the probability that the detected human being is the subject individual satisfies a predetermined criterion (for example, 95% or higher). When it is determined that the probability satisfies the predetermined criterion, the image recognition section 10 determines that the detected human being is the subject individual (i.e., the user). As a result, the processing advances to step ST6, where a usual-mode dialog is performed between the dialog-type agent **1** and the user. The dialog is controlled by the language processing section 30. The usual-mode dialog is, for example, a daily conversation. The usual-mode dialog may be started with the dialog-type agent **1** outputting a line of dialog, or with the user speaking a line of dialog.

An example of a usual-mode dialog will be shown below. Here, "S" refers to the lines of dialog of the dialog-type agent **1,** and "U1" refers to the lines of dialog of the user.
S: "Good Morning, Mr. U."
U1: "Good morning. Is it going to be a fine day today?"
S: "It is going to be fine all day today."
U1: "Good. What's new?"
S: "Yomiuri Giants manager Nagashima will leave the team. Tatsunori Hara will take over."

In step ST2, when it is determined that the probability that the detected human being is the subject individual does not satisfy the predetermined criterion (for example, the probability is less than 95%), the image recognition section 10 determines that the detected human being is not the subject individual (i.e., the detected human being is not the user). As a result, the processing advances to step ST3, where the a doubt-mode dialog is performed between the detected human being and the dialog-type agent **1**. This dialog is controlled by the language processing section 30. Here, the doubt-mode dialog is performed in the following form. The dialog-type agent **1** presents a question regarding the subject individual for the purpose of confirming that the detected human being is not the subject individual. Then, the detected human being answers the question.

An example of a doubt-mode dialog is shown below. Here, "S" again refers to the lines of dialog of the dialog-type agent **1**, and "U2" refers to the lines of dialog of a person who is not the user (for example, a criminal).
S: "Good morning, Mr. U. When is your birthday?"
U2: "April."
S: "Wrong! It is in October."

In step ST4, the language processing section 30 makes a final determination on whether or not the detected human being is the subject individual based on the result of the doubt-mode dialog in step ST3. When it is determined in step ST4 that the detected human being is the subject individual, the processing advances to step ST6, where the doubt-mode dialog is changed to a usual-mode dialog. When it is determined in step ST4 that the detected human being is not the subject individual, the processing advances to step ST5.

In step ST5, the language processing section **30** instructs the communication section **60** to make a report to a security company (or the police) through the communication line. The dialog-type agent **1** may be structured such that the communication section **60** makes the report and also sends information on the position of the dialog-type agent **1** to the security company (or the police).

As described above, according to the crime prevention program shown in Figure **2,** when it is determined that the probability that the human being detected in step ST2 is the subject individual is low, a doubt-mode dialog is performed in step ST3. Based on the result of the doubt-mode dialog, a final determination is made on whether or not the detected human being is the subject individual. Only when it is determined both in steps ST2 and ST4 that the detected human being is "not the subject individual", a report is made. It is twice determined that the detected human being is "not the subject individual", so that the determination is made with higher accuracy.

In the crime prevention program shown in Figure **2,** step ST2 may be omitted. In this case, when a human being is detected in step ST1, a doubt-mode dialog is started in step ST3. By omitting step ST2, the processing load of the image recognition section **10** is alleviated.

As described above, in this example, it can be determined whether or not the detected human being is the user, using the dialog-type agent **1.** When it is determined that the detected human being is not the user (for example, the detected human being is a criminal), a report is made to a security company (or the police). Thus, a crime can be prevented.

In the case where a vehicle having the dialog-type agent **1** installed therein is left in the care of a valet or a clerk in charge, it is preferable to turn off the dialog-type agent **1.** This is for preventing the dialog-type agent **1** from initiating a dialog with the clerk. Alternatively, the information on the position of the vehicle is used, such that the dialog-type agent **1** is set not to enter the doubt mode when the position of the vehicle is in a parking lot or a hotel.

The human being(s) who is to be determined as the subject individual may be one person or a plurality of persons. For example, when one vehicle is used by four people (A, B, C and D), information for specifying the subject individual (for example, information regarding the subject individual's gender, age, name, occupation, personality, interests and birth date) or information that only the subject individual can know is stored in the individual database **73** for each of the four people.

This example is applicable for preventing a suspicious person from invading a residence. For example, the dialog-type agent **1** can be installed in an interphone, and a dialog with the dialog-type agent **1** prevents a suspicious person from invading the residence. When the dialog-type agent **1** is installed inside the house, robbery can be prevented even if the suspicious person invades the residence.

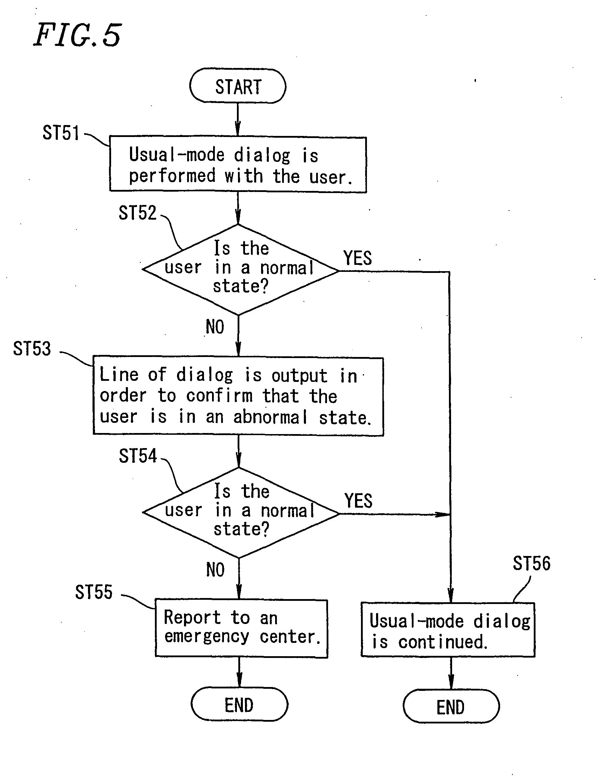

Figure **5** is a flowchart illustrating an example of the detailed flow of step ST6 shown in Figure **2.**

In step ST51, it is confirmed that the human being detected in step ST1 is the subject individual (i.e., the user). Therefore, a usual-mode dialog is performed between the dialog-type agent **1** and the user. This dialog is controlled by, for example, the language processing section **30.**

In step ST52, based on the result of the dialog performed in step ST51, it is determined whether or not the user is in a normal state. This determination is performed by, for example, the voice recognition section **20** and the language processing section **30.** For example, the voice recognition section **20** extracts a keyword from the voice of the user which is input through the voice input section **22.** The language processing section **30** determines whether or not the keyword extracted by the voice recognition section **20** matches one of predetermined keywords such as "pain" or "help!" (i.e., a keyword showing that the user is not in a normal state). The predetermined keywords are, for example, stored in advance in the dialog database **71.** When the keyword extracted matches one of the predetermined keywords, the language processing section **30** determines that the user is not in a normal state (i.e., in an abnormal state), and otherwise determines that the user is in a normal state. Alternatively, the dialog-type agent **1** may operate as follows. When the voice recognition section **20** detects that the voice of the user which is input through the voice input section **22** includes a certain silent period, the voice recognition section **20** may output a detection signal to the language processing section **30.** Upon receipt of the detection signal from the voice recognition section **20,** the language processing section **30** determines that the user is not in a normal state (i.e., in an abnormal state), and otherwise determines that the user is in a normal state.

When the determination result in step ST52 is "YES", the processing advances to step ST56. When the determination result in step ST52 is "NO", the processing advances to step ST53.

In step ST53, a line of dialog is output to the user for confirming that the user is in an abnormal state. This line of dialog is output by, for example, the language processing section **30,** the voice synthesis section **40** and the voice output section **50.** For example, the language processing section **30** generates a response such as "Are you all right?" , and outputs the response to the voice synthesis section **40.** The voice synthesis section **40** synthesizes the response to a voice. The synthesized voice is output from the voice output section **50.** As a result, a response for confirming that the user is in an abnormal state, for example, "Are you all right?", is output to the user.

In step ST54, based on the reaction from the user to the line of dialog output by the dialog-type agent **1** in step ST53 (for example, based on whether or not the user responded, and/or the content of the response from the user), a final determination is made on whether or not the user is in a normal state. This determination is performed by, for example, the voice recognition section 20 and the language processing section **30.** The determination in step ST54 is, for example, made in the same manner as the determination made in step ST52.

When the determination result in step ST54 is "YES", the processing advances to step ST56. When the determination result in step ST54 is "NO", the processing advances to step ST55.

In step ST55, the language processing section **30** instructs the communication section **60** to make a report to an emergency center through the communication line. The dialog-type agent **1** may be structured such that the communication section **60** makes the report and also sends the individual information of the user (for example, the user's age, gender, and clinical history stored in the individual database **73)** to the emergency center. Alternatively, the communication section **60** may send information on the position of the dialog-type agent to the emergency center **1.**

In step ST56, a usual-mode dialog is performed between the dialog-type agent **1** and the user.

As described above, in the detailed flow shown in Figure **5,** the determination on whether or not the user is in a normal state is made based on the dialog between the dialog-type agent **1** and the user. Such a determination method is more user friendly than a conventional method of using a sensor attached to the body of the user or using an image to determine whether or not the user is in a normal state. The user does not need to experience the discomfort of wearing the sensor or being monitored by the dialog-type agent **1.**

According to the detailed flow shown in Figure **5,** when it is determined in step ST52 that the user is not in a normal state, a line of dialog is output in step ST53 in order to confirm that the user is in an abnormal state, and a final determination is made in step ST54 on whether or not the user is in a normal state based on whether or not the user responded to the line of dialog output by the dialog-type agent **1** (or the content of the response). Only when it is determined that "the user is not in a normal state" both in steps ST52 and ST54, a report is made. It is twice determined that "the user is not in a normal state", so that the determination is made with higher accuracy.

According to the detailed flow shown in Figure **5,** the report to the emergency center is made after the human being detected in step ST1 (Figure **2)** is confirmed to be the subject individual (i.e., the user). Accordingly, even when the user cannot speak, the individual information on the user (for example, the user's age, gender, and clinical history) can be sent to the emergency center at the time of reporting. Thus, the emergency center can obtain the individual information of the user before the user is transported to the emergency center. As a result, the user can be appropriately treated at the emergency center quickly.

In the flow shown in Figure **5,** steps ST53 and ST54 may be omitted. In this case, when it is determined in step ST52 that the user is not in a normal state, a report is immediately made to the emergency center.

As described above, in this example, it is determined whether or not the detected human being is the user, using the dialog-type agent **1.** When it is determined that the detected human being is not the user, a report is made to a security company (or the police). Thus, a crime can be prevented. When it is determined that the detected human being is the user, it is further determined whether or not the user is in a normal state (or whether or not the user is in an abnormal state). When it is determined that the user is not in a normal state, a report is made to the emergency center. Thus, an accident can be prevented.

In this example, a dialog is performed between the dialog-type agent **1** and the detected human being, and based on the result of the dialog, it is determined whether or not an abnormality has occurred. When it is determined that an abnormality has occurred, a report is made. Here, the term "abnormality" refers to the situation in which the detected human being is not the user of the dialog-type agent **1.** Alternatively, the term "abnormality" refers to the situation in which the detected human being is the user of the dialog-type agent **1** and the user is not in a normal state.

### (Example 2)

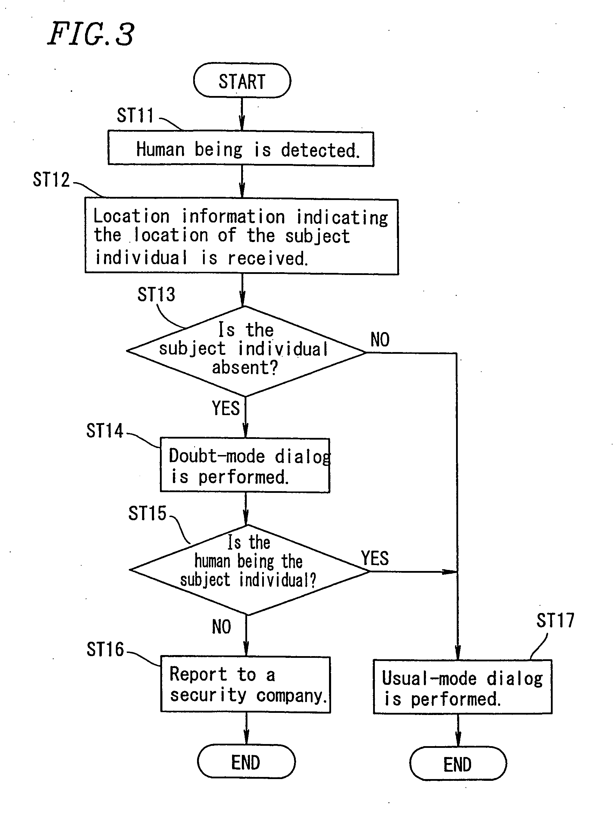

Figure **3** is a flowchart illustrating an exemplary procedure of a crime prevention program executed by the dialog-type agent **1** shown in Figure **1A.**

Hereinafter, each of the steps of the crime prevention program shown in Figure **3** will be described with an example of invasion prevention of a suspicious person to a residence. It is assumed that the dialog-type agent **1** is installed in, for example, a house, for example, a living room.

In step ST11, the image recognition section **10** detects a human being based on an image which is input through the image input section **12.** The human being detected in step ST11 may be the subject individual or may not be the subject individual (may be, for example, a criminal).

In step ST12, the language processing section **30** receives location information indicating a location of the subject individual. The language processing section **30** may receive the location information which is input to the dialog-type agent **1** through an input section (not shown) by the subject individual or receive location information through the communication section **60** from another dialog-type agent.

In step ST13, the language processing section **30** determines whether or not the subject individual is at home based on the location information received in step ST12.

When it is determined in step ST13 that the subject individual is not at home (for example, the subject individual is out), the processing advances to step ST14. When it is determined in step ST13 that the subject individual is not absent (for example, the subject individual is at home), the processing advances to step ST17.

The processing in steps ST14 through ST17 is the same as the processing in steps ST3 through ST6 shown in Figure **2,** and the description thereof will be omitted here. As in the first example, the flowchart in **Figure 5** is applicable to the detailed flow of step ST17 shown in Figure **3.** In this case, substantially the same effect as described above is provided.

According to the crime prevention program shown in Figure **3,** when it is determined in step ST13 that the subject individual is not at home, a doubt-mode dialog is performed in step ST14. Based on the result of the doubt-mode dialog, a final determination is made on whether or not the human being detected in step ST11 is the subject individual. Only when it is determined in step ST13 that "the subject individual is not at home" and it is further determined in step ST15 that the detected human being is "not the subject individual" , a report is made. Two determinations, i.e., the determination that "the subject individual is not at home" and the determination that the detected human being is "not the subject individual" are made, so that the determination on whether or not the detected human being is the subject individual can be made with higher accuracy.

In the flowchart shown in Figure **3,** steps ST14 and ST15 can be omitted. In this case, when it is determined in step ST13 that the subject individual is not at home, a report is immediately made to a security company (or the police).

As described above, in this example, it can be determined whether or not the detected human being is the user, using the dialog-type agent **1.** When it is determined that the detected human being is not the subject individual (for example, the detected human being is a criminal), a report is made to a security company (or the police). Thus, a crime can be prevented.

The procedure of the crime prevention program shown in Figure **3** is applicable to a multi-agent environment.

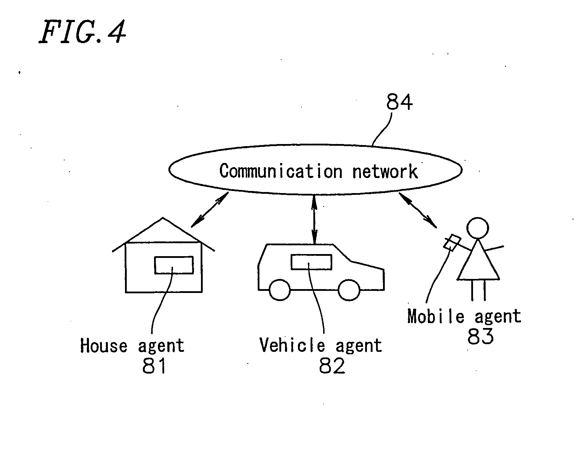

Figure **4** shows an exemplary multi-agent environment. In the example shown in Figure **4,** a house agent **81,** a vehicle agent **82** and a mobile agent **83** are connected to a communication network **84.** The multi-agent environment shown in Figure **4** is an example of a system including a plurality of dialog-type agents connected to each other via a communication network. The number of agents in the multi-agent environment is not limited to three. The number of agents in the multi-agent environment can be any number of two or more.

As each of the three agents **81** through **83,** the dialog-type agent **1** shown in Figure **1A** is usable. In order to use the agents **81** through **83** in the multi-agent environment, each of the agents **81** through **83** needs to further include a location information memory **90** (see Figure **1A**). The location information memory **90** will be described in detail below. The agents **81** through **83** are structured to be operated in association with each other by communicating with each other via the communication network **84.**

The house agent **81** is provided in a house. The vehicle agent **82** is provided in a vehicle. The mobile agent **83** is provided such that the subject individual can carry the mobile agent **83** in a portable manner. The mobile agent **83** is preferably of a wrist watch type owing to its superb portability.

It is assumed that, for example, the subject individual is out of the house in a vehicle. In this case, the vehicle agent **82** detects that the subject individual is in the vehicle, andprovides the house agent **81** with location information of the subject individual which indicates that the subject individual is in the vehicle. Upon receipt of the location information from the vehicle agent **82,** the house agent **81** understands that the subject individual is out of the house. Accordingly, the house agent **81** can determine that the subject individual is absent in step ST13 in Figure **3.**

The plurality of dialog-type agents can be operated in association with each other, so that a dialog made in the past is not repeated. For example, in the case where a person is involved in a dialog with the house agent **81** regarding that day's weather when the person wakes up, it is preferable that the person is involved in a dialog on another topic (for example, the sporting events scheduled for that day) when the person goes out in the vehicle, without repeating the dialog on that day's weather. Such a control on the dialog is achieved as follows. The dialogs made between the house agent **1** and the person is stored in the dialog history database **72** of the house agent **81,** and the vehicle agent **82** refers to the dialog history database **72** of the house agent **81** so as to avoid repeating the dialog made in the past.

Dialog-type agents usable in the multi-agent environment execute various agent functions (including the function of reading electronic mails aloud) in various situations in life, so as to interact with a human through dialog. Such dialog-type agents are close to the user' s life, user friendly, and useful. Therefore, the user utilizes the dialog-type agents in various situations in life.

The procedure of the crime prevention program shown in Figure **3** is for the case where there is one user (possessor). Hereinafter, a procedure of a crime prevention program for the case where there are a plurality of users in themulti-agent environment will be described.

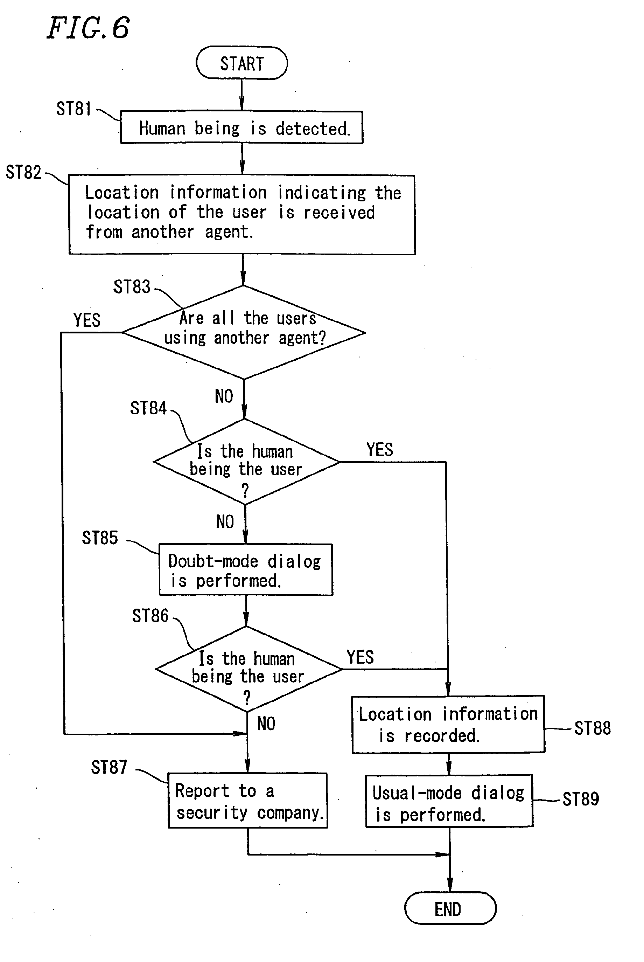

Figure **6** shows a procedure of a crime prevention program which is executed by each of the house agent **81,** the vehicle agent **82** and the mobile agent **83.** Here, it is assumed that the house agent **81,** the vehicle agent **82** and the mobile agent **83** each have the same structure as that of the dialog-type agent **1** shown in Figure **1A.** It is also assumed that the multi-agent environment is set such that the house agent **81,** the vehicle agent **82,** and the mobile agent **83** are connected through the communication network **84.**

Here, it is assumed that the user includes two persons, i.e., "user A" and "user B". In this case, the user name of "user A" and the user name of "user B" are registered in the individual database **73** of each agent. Like in the first example, the individual database **73** may have information for specifying the user (image, voice feature amount, etc.) and the information which only the user can know stored therein for each user.

Hereinafter, each of steps of the crime prevention program shown in Figure **6** will be described with an example of invasion prevention of a suspicious person to a residence.

The processing in step ST81 is the same as that of step ST1 shown in Figure **2,** and thus the description thereof will be omitted. For example, the image recognition section **10** functions as a detection section for detecting a human being.

In step ST82, the communication section **60** receives location information indicating the location of the user from another agent. Here, the term "another agent" refers to an agent which is among the plurality of agents in the multi-agent environment and is not the subject agent. For example, the communication section **60** of the house agent **81** receives location information indicating the location of user A from the vehicle agent **82** and receives location information indicating the location of user B from the mobile agent **83.**

Thus, the communication section **60** acts as a receiving section for receiving location information from the location information memory **90** of another dialog-type agent via the communication network **84.**

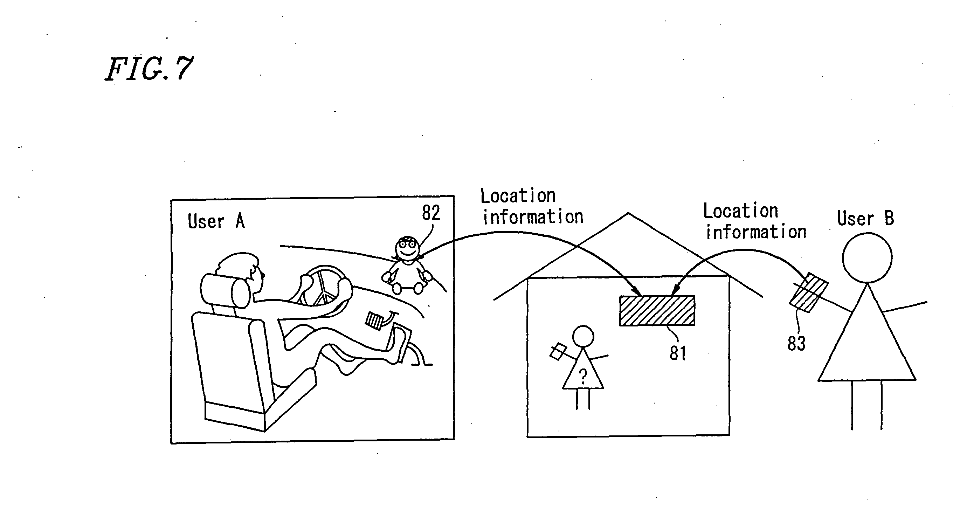

Figure **7** schematically shows a state where the house agent **81** receives the location information indicating the location of user A from the vehicle agent **82** and the location information indicating the location of user B from the mobile agent **83.** The location information of users A and B is stored in the location information memory **90** of the house agent **81.**

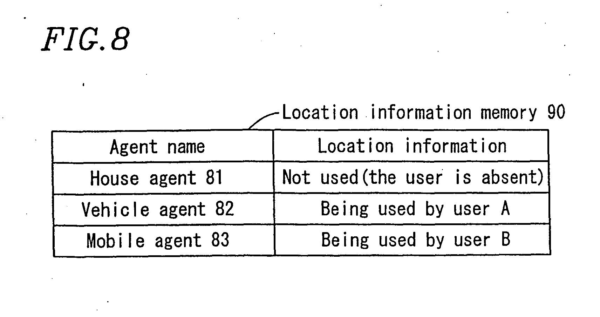

Figure **8** shows an example of the content of the location information memory **90** of the house agent **81.** In the state shown in Figure **8,** the house agent **81** is not being used by user A or user B (i.e., the house agent **81** is not in use, or the user is not at home), the vehicle agent **82** is being used by user A, and the mobile agent **83** is being used by user B. When the location information memory **90** is in an initial state, none of the agents is used by any of the users.

In step ST83, the language processing section **30** refers to the location information memory 90 so as to determine whether all the plurality of users are using another agent.

When the determination result in step ST83 is "YES", the processing advances to step ST87, and when the determination result in step ST83 is "NO", the processing advances to step ST84.

When, for example, the content of the location information memory **90** of the house agent **81** is as shown in Figure **8,** both users A and B are using another agent (i.e., the vehicle agent **82** and the mobile agent **83).** In this case, the processing advances to step ST87.

The processing in steps ST84, ST85 and ST86 is the same as that of steps ST2, ST3 and ST4 shown in Figure **2,** and the description thereof will be omitted.

Thus, the language processing section **30** acts as a determination section for determining whether or not the detected human being is the user, based on the location information received from another agent.

In step ST87, the language processing section **30** instructs the communication section **60** to make a report to a security company (or the police) via the communication line.

Thus, the language processing section **30** and the communication section **60** act together as a reporting section for making a report when it is determined that the detected human being is not the subject individual.

When it is determined that at least one of the plurality of users is not using another agent (step ST83) and it is further determined that detected human being is the user (steps ST84 and ST86), the processing advances to step ST88.

In step ST88, the language processing section **30** records the user name in the location information memory **90** of the house agent **81.**

When the location information received from another agent in step ST82 indicates that one of the plurality of users (for example, user A) is using another agent, the determination in step ST84, on whether or not the detected human being is the user, can be performed for the plurality of users excluding the user who is using another agent. Thus, the targets of the determination can be limited. For example, when the language processing section **30** of the house agent **81** determines that the human being detected in step ST84 is the user (language processing section **30** also determines the user name), the user name can be recorded as using the house agent **81** in the location information memory **90** in step ST88.

The processing in step ST89 is the same as that of step ST6 shown in Figure **2,** and description thereof will be omitted. Like in the first example, the flowchart shown in Figure **5** may be applied as the detailed flow of step ST89 shown in Figure **6.** In this case, the same effect as described above is provided.

### (Example 3)

When the mobile agent **83** (Figure **4)** detects that the response from the user is different from the usual response in a usual-mode dialog, it is preferable to change the usual mode to the doubt mode and perform a dialog with the user in the form of asking questions to obtain information for specifying the subject individual (for example, the birth date of the user). When the user cannot answer the question to obtain information for specifying the subject individual, it is preferable to determine that there is a high possibility of the subject individual being harmed or of the mobile agent **83** being stolen, and report that to the security company (or the police). The information on the location of the mobile agent **83** may be sent to the security company (or the police) simultaneously with the report.

Alternatively, the following arrangement is usable. A keyword is predetermined between the mobile agent **83** and the subject individual, such that when the subject individual is exposed to danger, the subject individual says the keyword. When the mobile agent **83** detects the keyword, the mobile agent **83** makes a report to the security company (or the police). The keyword is preferably a code word which does not convey any meaning to a third party (for example, the word "happa-fu-mi-fu-mi")

In the first through third examples, a dialog-type agent is described as an example of a dialog-type apparatus. The dialog-type apparatus is not limited to this. The dialog-type apparatus may be any apparatus which is structured so as to be capable of performing a dialog with ahumanbeing. The dialog-type apparatus may be, for example, a dialog-type toy.

According to the present invention, a criminal or an invader to a house can be specified using a dialog-type agent. Thus, a crime can be prevented. The present invention can determine abnormality of a body of the user, using the dialog-type agent. Thus, an accident can be prevented by reporting the abnormality to a preset institution or the like.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A method for preventing a crime using a dialog-type apparatus capable of performing a dialog with a human being, the method comprising the steps of:
the dialog-type apparatus detecting a human being;
the dialog-type apparatus receiving location information which indicates a location of a user of the dialog-type apparatus;
the dialog-type apparatus determining whether or not the human being is the user based on the location information; and
the dialog-type apparatus making a report when it is determined that the human being is not the user.

2. A method according to claim 1, wherein the dialog-type apparatus receives the location information from another dialog-type apparatus via a communication line.

3. A method according to claim 1, wherein the step of the dialog-type apparatus determining whether or not the human being is the user based on the location information includes the steps of:
the dialog-type apparatus determining whether or not the user is absent based on the location information;
the dialog-type apparatus performing a dialog with the human being regarding the user when it is determined that the user is absent; and
the dialog-type apparatus determining whether or not the human being is the user based on a result of the dialog.

4. A method according to claim 1, further comprising the steps of:
the dialog-type apparatus determining whether or not the user is in a normal state when it is determined that the human being is the user; and
the dialog-type apparatus making a report when it is determined that the user is not in a normal state.

5. A method according to claim 1, wherein the dialog-type apparatus refers to dialog history in a dialog history database of another dialog-type apparatus.

6. A method according to claim 1, wherein the dialog-type apparatus is installed in a vehicle.

7. A method according to claim 1, wherein the dialog-type apparatus is installed in a house.

8. A system including a plurality of dialog-type apparatuses which are connected to each other via a communication network, each of the plurality of dialog-type apparatuses being structured so as to be capable of performing a dialog with a human being, each of the plurality of dialog-type apparatuses comprising:
a detection section for detecting a human being;
a location information memory for storing location information which indicates a location of a user of the dialog-type apparatus;
a receiving section for receiving the location information from the location information memory of another dialog-type apparatus in the system via the communication network;
a determination section for determining whether or not the human being detected by the detection section is the user based on the location information received from the another dialog-type apparatus; and
a reporting section for making a report when it is determined that the human being is not the user.

9. A system according to claim 8, wherein the determination section determines whether or not the user is absent based on the location information; when it is determined that the user is absent, performs a dialog regarding the user with the human being detected by the detection section; and determines whether or not the human being is the user based on a result of the dialog.

10. A system according to claim 8, wherein when it is determined that the human being detected by the detection section is the user, the determination section further determines whether or not the user is in a normal state; and when it is determined that the user is not in a normal state, the reporting section makes a report.
